# EUROPEAN PATENT APPLICATION

(11) **EP 2 431 618 A1**
(43) Date of publication of application: **21.03.2012**
(21) Application number: 10176008.0
(22) Date of filing: 09.09.2010
(51) Int. Cl.: F16B 25/10, E04D 3/36

(54) **Screw for corrugated board**

(71) Applicant: Yow Cheng Co., Ltd., Alian Township Kao hsiung 822 (TW)
(72) Inventor: Hsu, Tai-Ping, 822, Kaohsiung County (TW)
(74) Representative: Chaillot, Geneviève

(57) **Abstract**

A screw (4) for a corrugated board (5) secured to a frame (6) comprises a head portion (41), a shank portion (42) extended from the head portion (41), and a drilling portion (43) disposed at one end of the shank portion (42). Wherein, the shank (42) includes a fixing section (421) and a threaded section (422) with a ring block (44) prominently disposed therebetween. A ring edge (441) is further disposed along a periphery of the ring block (44), facing the drilling portion (43). By means of the ring edge (441) densely covering on the corrugated board (5) while cutting, a speedy cutting effect is obtainable on the corrugated board (5), and an accurate propping of the ring block (44) against the frame (6) is achieved. Thereby, the fastening effect on the corrugated board (5) is secured to avoid slantwise screwing the screw (4) into the corrugated board (5). Therefore, the appearance of the structure is not influenced.

## Description

### BACKGROUND OF THE INVENTION

### 1. Field of the Invention

The present invention relates to a screw, particularly to a screw for corrugated board that is to be secured on the roof.

### 2. Description of the Related Art

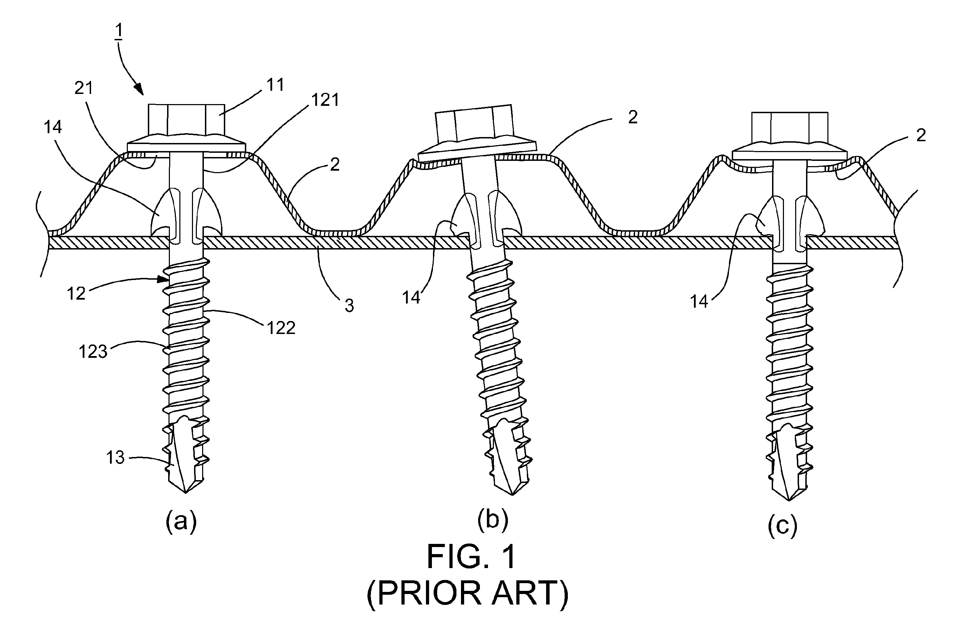

Referring to Fig. **1****,** a conventional screw **1** for corrugated board comprises a head portion **11,** a shank **12** extended from the head portion **11,** a drilling portion **13** disposed at one end of the shank portion **12,** and a pair of wings **14** symmetrically disposed on the shank portion **12.** Wherein, the shank portion **12** includes a fixing section **121** connected to the head portion **11,** and a threaded section **122** connected to the fixing section **121** as well as the drilling portion **13.** A number of threads **123** are spirally disposed around the threaded section **122.** Further, the pair of wings **14** are symmetrically disposed between the fixing section **121** and the threaded section **122.** Each wing **14** is formed like a sharp barb.

In time of operation, the drilling portion **13** and the threads **123** are driven into a corrugated board **2** and a frame **3.** Concurrently, the wings **14** cut a perforation **21,** whose diameter is larger than that of the shank portion **12,** on the corrugated board **2.** Thereby, a suited gap between the perforation **21** and the shank portion **12** is reserved for a temperature deformation or an earthquake distortion on the corrugated board **2,** which prevents the corrugated board **2** from breakage in view of the compressed perforation **21.** Moreover, the pair of wings **14** provides the screw **1** with a further function. That is, referring to Fig. **1(a)****,** propping the wings **14** against the frame **3** impedes the screw **1** from going deeper. Accordingly, the secured screw **1** on the corrugated board **2** would not go further, and the head portion **11** would not adversely compress the corrugated board **2.** As a result, the corrugated board **2** is prevented from damage.

However, such conventional screw **1** for corrugated board includes shortcomings in time of the practical application as follows:
1. There is only a pair of symmetrical wings **14** arranged on the screw **1,** which means a cutting force is especially bestowed upon the tips of the wings **14.** As a result, the tips of the wings **14** readily wear away, and the wings **14** may not efficiently cut out a satisfactory perforation **21** on the corrugated board **2.** Thereby, the drilling speed is affected.
2. The drilling speed of the screw **1** is actually affected by the pitch between any two threads **123.** Herein, although propping the wings **14** against the frame **3** preferably impedes the screw **1** from going deeper, an unsuitable pitch defined between any two threads **123** might still adversely affect the drilling speed of the screw **1.** Namely, an overlarge pitch between the threads **123** might facilely bring the screw **1** penetrating the corrugated board **2** and the frame **3,** which incurs an inferior fastening effect.
3. Succeedingly, during cutting, one of the wings **14** might be readily broken, and the asymmetrical wings **14** are incurred in view of their discordant dimensions. Whereby, such broken wings **14** can not impart an even propping force on the frame **3** anymore, and a slanted screw **1** is disposed as shown in Fig. **1(b)****.** Further referring to Fig. **1(c)****,** practically, the distance between the head portion **11** and the wings **14** is equal to the distance between the corrugated **2** and the frame 3. Herein, if the wings **14** have asymmetrical dimensions in view of the breakage, the corrugated board **2** is easily compressed and distorted by the head portion **11** slantwise disposed against the board. Thus, afore disadvantage needs to be amended.

### SUMMARY OF THE INVENTION

It is therefore the purpose of this invention to provide a screw for corrugated board to enhance a speedy cutting capability and attain a preferably fastening effect after screwing.

The screw for corrugated board in accordance with the present invention takes advantages of a head portion, a shank portion extended from the head portion, and a drilling portion disposed on one end of the shank portion. Wherein, the shank portion includes a fixing section and a threaded section. A ring block is prominently disposed between the fixing section and the threaded section. A periphery of the ring block that is set corresponding to the drilling portion further forms a ring edge thereon.

Preferably, a plurality of slots are disposed on said ring edge, thereby allowing an indented section to be formed on said ring edge.

Preferably, a first outer diameter of said fixing section is larger than a second diameter of said threaded section.

Preferably, a length of said fixing section equals to a distance between said corrugated board and said frame.

Preferably, at least one cleaving section is defined on said ring block; obstructed by said cleaving section, said ring block forms a number of ring-cutting units thereon.

The ring edge fully covers on the corrugated board for achieving a swift cutting. Besides, the ring block further accurately props against a frame after penetrating the corrugated board. Thus, a favorably securing effect after screwing is achieved, and the corrugated board is not adversely compressed and distorted to influence the appearance of the structure.

### BRIEF DESCRIPTION OF THE DRAWINGS

Fig. **1** is a schematic view showing a conventional screw;
Fig. **2** is a perspective view showing a first preferred embodiment of the present invention;
Fig. **3** is a schematic view showing the first preferred embodiment of the present invention in screwing;
Fig. **4** is a schematic view showing the first preferred embodiment of the present invention in screwing;
Fig. **5** is a perspective view showing a second preferred embodiment of the present invention;
Fig. **6** is a perspective view showing a third preferred embodiment of the present invention;
Fig. **7** is a cross-sectional view showing the A-A section in Fig. 6; and
Fig. **8** is another perspective view showing the third preferred embodiment of the present invention.

### DETAILED DESCRIPTION OF THE PREFERRED EMBODIMENTS

Wherever possible, the same reference numbers are used in the drawings and the description to refer to the same or like parts.

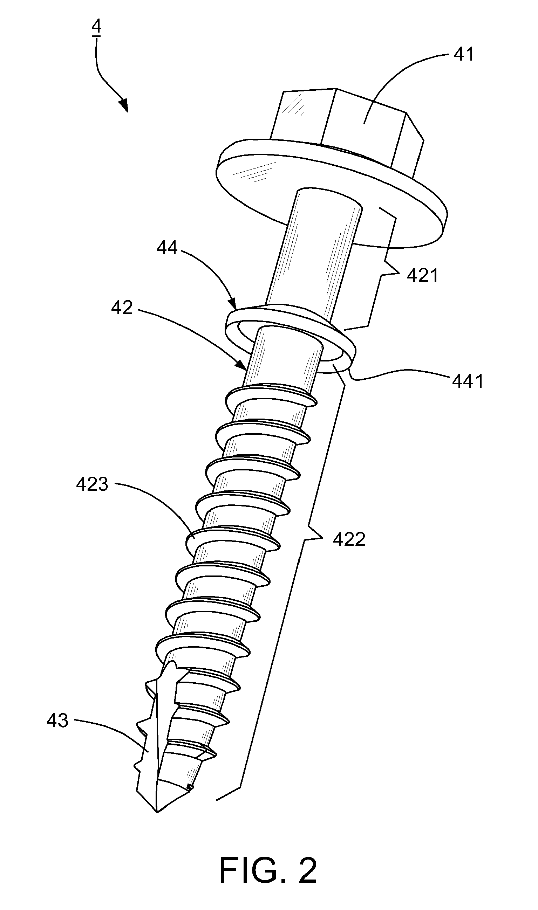

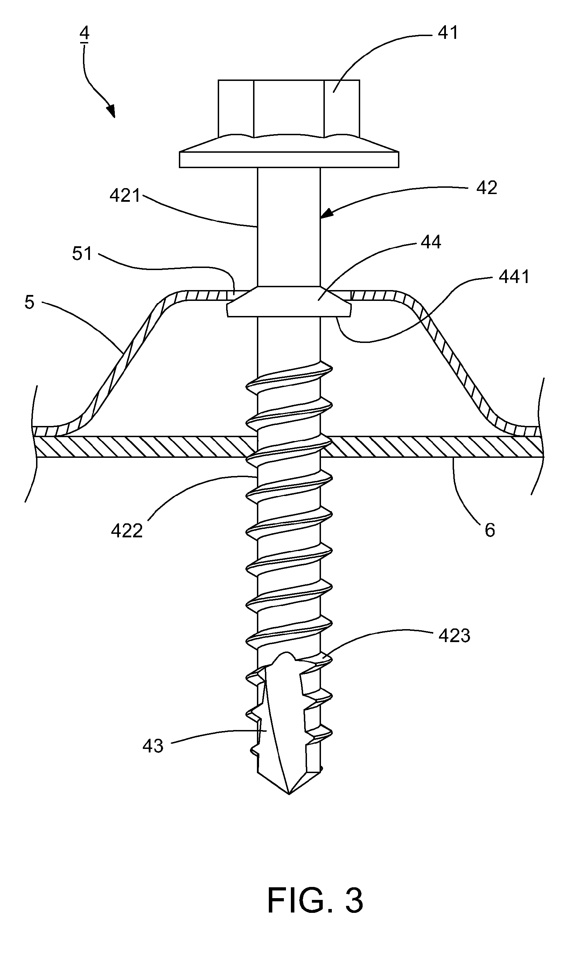

Referring to Figs. **2** and **3****,** a first preferred embodiment of the present invention is shown. A screw **4** for corrugated board is applied to a corrugated board **5** with a frame **6.** The screw **4** comprises a head portion **41,** a shank portion **42** extended from the head portion **41,** a drilling portion **43** disposed at one end of the shank portion **42,** and a ring block **44** surrounding the shank portion **42.** Wherein, the shank portion **42** includes a fixing section **421** connected to the head portion **41** and a threaded section **422** respectively connecting to the fixing portion **421** as well as the drilling portion **43.** A number of threads **423** are spirally disposed on the threaded section **422.** Herein, the distance of the fixing section **421** equals to the distance between the corrugated **5** and a frame **6** after securing. Succeedingly, the ring block **44** is arranged between the fixing section **421** and the threaded section **422.** A ring edge **441** is disposed along a periphery of the ring block **44,** facing the drilling portion **43.** Furthermore, the drilling portion **43** could be formed by a drilling end, or it could be formed by a tapered end in accordance with the workpiece made of different materials. In this embodiment, the drilling portion **43** is formed by a drilling end.

Referring to Fig. **3****,** in time of fastening the screw **4** on the corrugated board **5,** the drilling portion **43** and the threads **423** concurrently cut the corrugated board **5,** thereby rotatively driving the shank portion **42** into the frame **6.** When the ring block **44** touches the corrugated board **5,** the ring edge **441** disposed on the ring block **44** begins to cut out a perforation **51** on the corrugated board **5.** During drilling, the ring edge **441** props against the corrugated board **5** with a dense circle. Thereby, the imparted drilling force can be evenly distributed on the ring edge **441** so as to prevent the ring edge **441** from damage and abrasion due to a concentrating contact pressure. Moreover, the ring edge **441** is able to bear a rather large screwing force and offer a preferably cutting effect. Thus, the pitch between any two threads **432** of the screw **4** would not be further limited even a large screwing force is bestowed; namely, the width between the threads **423** could be increased without considering the driving force. Concurrently, the screwing speed is preferably enhanced.

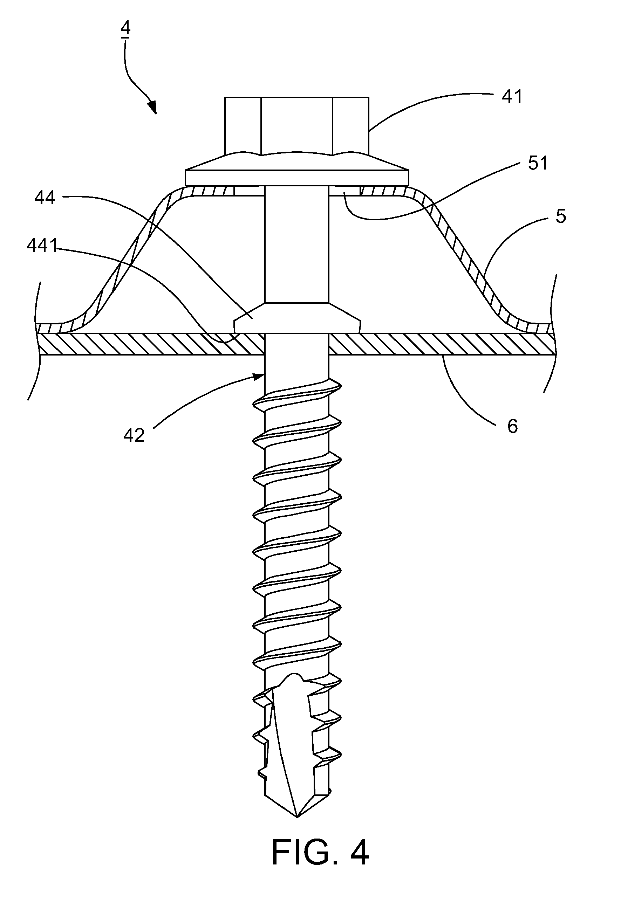

Accompanying with Fig. **4****,** the ring block **44** continues cutting the corrugated board **5** and penetrating the perforation **51** until the ring block **44** props against the frame **6.** Herein, since the frame **6** adopts a rather thick and hard material, the ring edge **441** of the ring block **44** can not easily go through the frame **6.** That is, the ring block **44** is impeded by the frame **6** and secured thereon. In addition, since the ring block **44** is in a high strength featured of surrounding the shank portion **42,** the ring edge **441** does not easily break so as to maintain a constant distance between the head portion **41** and the ring block **44** equal to the distance between the corrugated board **5** and the frame **6.** Accordingly, such screw **4** is preferably and evenly secured to the corrugated board **5.**

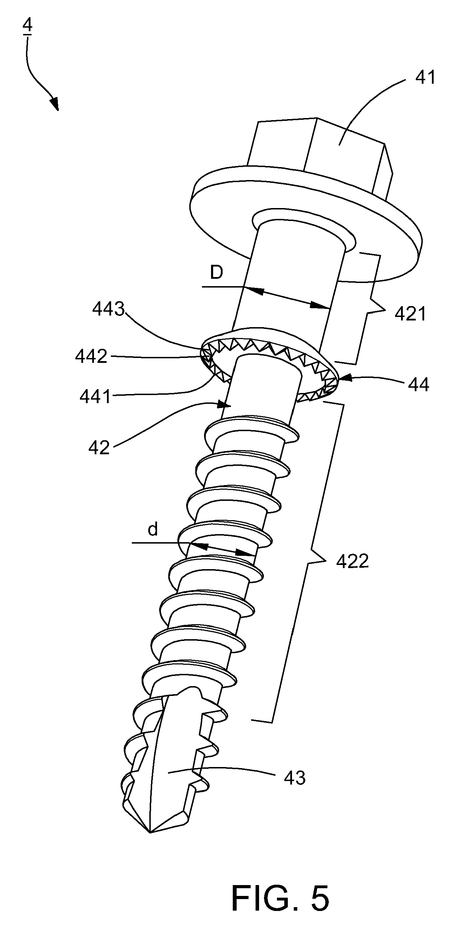

Referring to Fig. **5****,** a second preferred embodiment of the present invention is shown. The screw **4** for corrugated board similarly comprises a head portion **41,** a shank portion **42,** a drilling portion **43,** and a ring block **44.** The like elements and functions correlated to the first preferred embodiment are herein omitted. Differently, a first outer diameter **D** of the fixing section **421** of the shank **42** is larger than a second outer diameter **d** of the threaded section **422.** Moreover, a plurality of slots **442** defined on the ring edge **441** of the ring block **44** allows an indented section **443** to be formed on the ring edge **441.** By means of first outer diameter **D** of the fixing section **421** larger than the second outer diameter **d** of the threaded section **422,** the ring block **44** could be more conveniently shaped. Besides, the plural slots **442** on the ring edge **441** further permit a multi-point cutting to be brought about by the indented section **443** when the ring edge **441** contacts the corrugated board (not shown). As a result, the drilling resistance generated while screwing could be decreased, and a less laborious but speedy screwing is achieved.

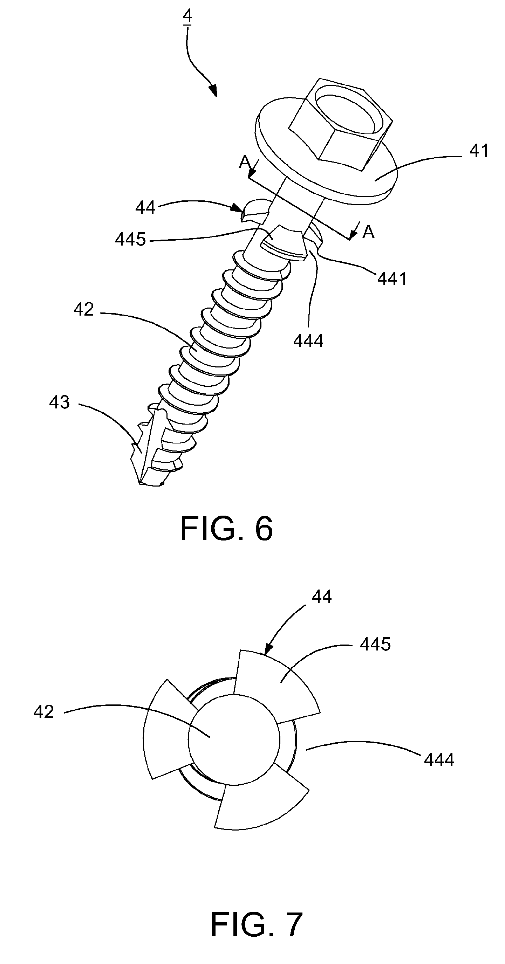

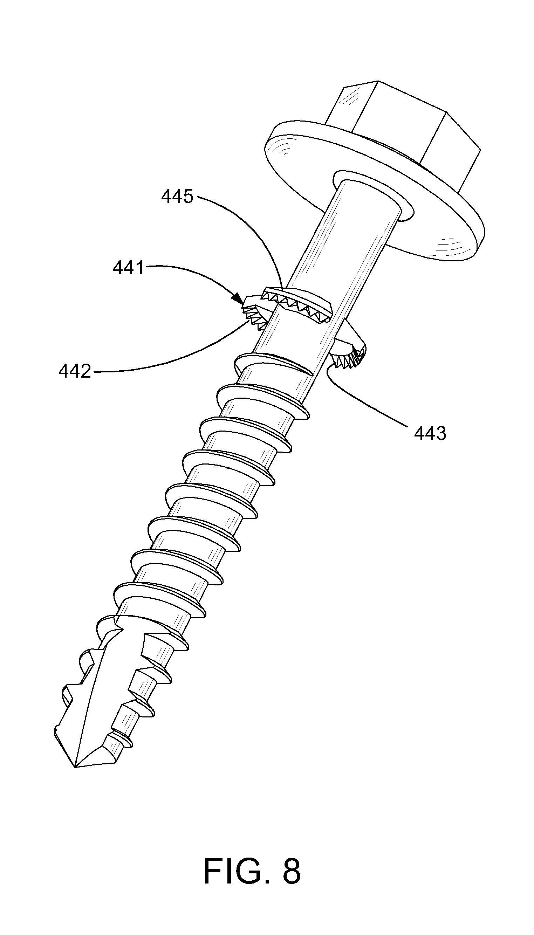

Figs. **6** and **7** show a third preferred embodiment of the present invention. The screw **4** for corrugated board still comprises a head portion **41,** a shank portion **42,** a drilling portion **43,** and a ring block **44.** Differently, at least one cleaving section **444** is defined on the ring block **44.** Three cleaving sections **444** are adopted in this embodiment so as to divide the ring block **44** into a plurality of ring-cutting units **445,** for instance of three. Wherein, the ring-cutting units **445** preferably extrude cutting debris generated while cutting the corrugated board (not shown) for promoting the cutting effect. In addition, some slots **442** could be alternatively defined on the ring edge **441** of each ring-cutting unit **445,** so that a plurality of indented sections **443** could be formed on the ring edge **441** at intervals as shown in Fig. **8****.** As it should be, the embodiments shown in either Fig. **6** or Fig. **8** preferably achieve the same swift cutting efficiency, and a promoted securing effect after screwing is also achieved.

To sum up, the present invention particularly utilizes the ring block defining a ring edge that faces the drilling portion. Thereby, the screwing force could be evenly distributed on the ring edge, so that the ring edge is able to bear a larger driving torque. As a result, the ring block is prevented from breakage resulted from an overlarge driving torque. Moreover, the ring block would be more accurately propped against on the frame, so that the screw for corrugated board densely and parallelly fixes the corrugated board, thence enhancing the fastening effect.

While we have shown and described the embodiment in accordance with the present invention, it should be clear to those skilled in the art that further embodiments may be made without departing from the scope of the present invention.

## Claims

1. A screw (4) for corrugated board comprising a head portion (41), a shank portion (42) extended from said head, and a drilling portion (43) disposed at an end of said shank portion (42); wherein, said shank portion (42) is formed by a fixing section (421) connected to said head portion (41) and a threaded section (422) respectively connected said fixing section (421) as well as said drilling portion (43); a plurality of threads (423) being spirally disposed on said threaded section (422);
wherein, a ring block (44) is protrudently disposed between said fixing section (421) and said threaded section (422); a ring edge (441) is disposed along a periphery of said ring block (44), facing said drilling portion (43).

2. The screw as claimed in claim 1, wherein, a plurality of slots (442) are disposed on said ring edge (441), thereby forming an indented section (443) on said ring edge (441).

3. The screw as claimed in claim 1, wherein, a first outer diameter (D) of said fixing section (421) is larger than a second diameter (d) of said threaded section (422).

4. The screw as claimed in claim 2, wherein, a first outer diameter (D) of said fixing section (421) is larger than a second diameter (d) of said threaded section (422).

5. The screw as claimed in claim 1, wherein, a length of said fixing section (421) equals to a distance between said corrugated board (5) and said frame (6) after screwing.

6. The screw as claimed in claim 2, wherein, a length of said fixing section (421) equals to a distance between said corrugated board (5) and said frame (6) after screwing.

7. The screw as claimed in claim 1, wherein, at least one cleaving section (444) is defined on said ring block (44) to separate said ring block (44) into a number of ring-cutting units (445).

8. The screw as claimed in claim 2, wherein, at least one cleaving section (444) is defined on said ring block (44) to separate said ring block (44) into a number of ring-cutting units (445).
